# EUROPEAN PATENT APPLICATION

(11) **EP 4 707 778 A1**
(43) Date of publication of application: **11.03.2026**
(21) Application number: 24904071.8
(22) Date of filing: 26.11.2024
(51) Int. Cl.: G01N 19/04, G01N 21/359, G01N 21/3563, G01D 1/02, G01D 1/10, G06N 3/08, G06N 20/20, H01M 4/04

(54) **TRAINING DEVICE AND METHOD FOR PREDICTING ADHESION TO ELECTRODE, ELECTRODE MONITORING DEVICE AND ELECTRODE MANUFACTURING METHOD USING PREDICTION MODEL TRAINED USING SAME, AND LITHIUM SECONDARY BATTERY MANUFACTURED THEREBY**

(30) Priority: 12.12.2023 KR 20230179489; 05.11.2024 KR 20240154935
(71) Applicant: LG Energy Solution, Ltd., Seoul 07335 (KR)
(72) Inventor: YOON, Seok Hee, Daejeon 34122 (KR); LEE, Junghyoung, Daejeon 34122 (KR); KWON, Eunjin, Daejeon 34122 (KR); CHOI, Hyeon, Daejeon 34122 (KR); LEE, Heejeong, Daejeon 34122 (KR)
(74) Representative: Plasseraud IP
(86) International application number: PCT/KR2024/018858
(87) International publication number: WO 2025/127506

(57) **Abstract**

Disclosed is a learning apparatus and method for predicting adhesive force to an electrode, an electrode monitoring device and an electrode manufacturing method using a prediction model trained by using the same, and a lithium secondary battery manufactured by the same. The learning apparatus for predicting adhesive force to an electrode includes: a memory in which a near-infrared spectrum for an electrode and a measurement value of adhesive force of the electrode; a prediction model for predicting the adhesive force of the electrode by receiving a differential mean of a plurality of wave number sections including a characteristic for the adhesive force of the electrode in the near-infrared spectrum; and a processor for receiving the near-infrared spectrum, performing primary differentiation on the near-infrared spectrum, extracting the plurality of wave number sections from the primarily differentiated near-infrared spectrum, calculating the differential mean of the plurality of wave number sections, and transmitting the calculated differential mean to the prediction model, in which the processor receives a predicted value for the adhesive force of the electrode and trains the prediction model so that the predicted value is close to the measurement value.

## Description

### [Technical Field]

This application claims priority to and the benefit of Korean Patent Application Nos. 10-2023-0179489 and 10-2024-0154935 filed with the Korean Intellectual Property Office on December 12, 2023 and November 5, 2024, the entire contents of which are incorporated herein by reference.

The present disclosure relates to a learning apparatus and method for predicting adhesive force of an electrode, an electrode monitoring device and an electrode manufacturing method using a prediction model trained by using the same, and a lithium secondary battery manufactured by the same.

### [Background Art]

In order to measure adhesive force of an electrode, in the related art, a part of the electrode to be measured is cut according to a standard, one side of the electrode was fixed to a substrate by using a double-sided tape, and then the electrode is peeled with a physical property meter to measure the adhesive force of the electrode.

Such a destructive manner test has problems in that a part of the generated electrode is lost, the same operation is repeated for each produced electrode sample, and the adhesive force of the electrode that changes during the process cannot be measured in real time because the electrode peeling process takes a long time.

Therefore, there is a need for a method of predicting adhesive force of an electrode in a way that can monitor the adhesive force of the electrode in real time during the process while reducing the loss of the produced electrode.

### [Disclosure]

### [Technical Problem]

The present disclosure attempts to provide a learning method and apparatus capable of predicting adhesive force of an electrode in a non-destructive manner by using a near-infrared spectrum and machine learning.

### [Technical method]

An exemplary embodiment of the present disclosure provides a learning apparatus for predicting adhesive force to an electrode, the learning apparatus including: a memory in which a near-infrared spectrum for an electrode and a measurement value of adhesive force of the electrode are stored; a prediction model for predicting the adhesive force of the electrode by receiving a differential mean of a plurality of wave number sections including a characteristic for the adhesive force of the electrode in the near-infrared spectrum; and a processor for receiving the near-infrared spectrum, performing primary differentiation on the near-infrared spectrum, extracting the plurality of wave number sections from the primarily differentiated near-infrared spectrum, calculating the differential mean of the plurality of wave number sections, and transmitting the calculated differential mean to the prediction model, in which the processor trains the prediction model so that the prediction model receives a predicted value for the adhesive force of the electrode and the predicted value is close to the measurement value.

The prediction model may predict adhesive force after a coating process of the electrode or adhesive force after a rolling process of the electrode.

The plurality of wave number sections may include: a moisture section in which the characteristic of the near-infrared spectrum is changed by moisture in the electrode; and a binder section in which the characteristic of the near-infrared spectrum is changed by a binder in the electrode.

The processor may include a differentiator that primarily differentiates the near-infrared spectrum by using a Savitsky-Golay filter.

The processor may receive the near-infrared spectrum and the measurement value, calculate each of the plurality of differential means for each of the plurality of wave number sections of the near-infrared spectrum, generate the plurality of differential means and the measurement value as training data, and generate the training data for a plurality of electrodes to construct a data set.

The processor may receive the near-infrared spectrum, the measurement value, a thickness of the electrode, and an active material loading value of the electrode, calculate each of a plurality of differential means for each of the plurality of wave number sections of the near-infrared spectrum, generate the plurality of differential means, the measurement value, the thickness of the electrode, and the active material loading value of the electrode as training data, and generate the training data for a plurality of electrodes to construct a data set.

The prediction model may perform training for predicting the adhesive force of the electrode by applying a plurality of training data randomly extracted from the data set to a random forest training model.

Another exemplary embodiment of the present disclosure provides a learning method for predicting adhesive force to an electrode, the learning method including: primarily differentiating, by a processor, a near-infrared spectrum input for an electrode, extracting a plurality of wave number sections containing a characteristic of adhesive force of the electrode from the primarily differentiated near-infrared spectrum, and calculating a differential mean of the plurality of wave number sections; predicting, by a prediction model, adhesive force of the electrode by receiving the differential mean for the plurality of wave number sections and a measurement value input for the adhesive force of the electrode; and training, by the processor, the prediction model so that a predicted value for the adhesive force of the electrode is close to the measurement value.

The adhesive force of the electrode may include adhesive force after a coating process of the electrode or adhesive force after a rolling process of the electrode.

The plurality of wave number sections may include: a moisture section in which the characteristic of the near-infrared spectrum is changed by moisture in the electrode; and a binder section in which the characteristic of the near-infrared spectrum is changed by a binder in the electrode.

The extracting of the plurality of wave number sections may include primarily differentiating, by the processor, the near-infrared spectrum by using a Savitsky-Golay filter.

The learning method may further include: generating, by the processor, the differential mean calculated for the plurality of wave number sections of the near-infrared spectrum and the measurement value as training data; and generating the training data for a plurality of electrodes and constructing a data set.

The learning method may further include: generating, by the processor, the plurality of differential means calculated for each of the plurality of wave number sections of the near-infrared spectrum, the measurement value, the thickness of the electrode, and the active material loading value of the electrode as training data; and generating the training data for a plurality of electrodes and constructing a data set.

The training of the prediction model may include performing training the prediction model for predicting the adhesive force of the electrode by applying a plurality of training data randomly extracted from the data set to a random forest training model.

Another exemplary embodiment of the present disclosure provides an electrode manufacturing method using a prediction model trained by the learning apparatus, the electrode manufacturing method including: preparing a slurry by mixing an active material, a binder, and a conductive material through a blender; coating the mixed slurry on a support through a coating device and drying the support coated with the slurry through a drying oven; obtaining a near-infrared spectrum by emitting near-infrared rays to the coated and dried electrode through a near-infrared spectrometer, and inputting the obtained near-infrared spectrum into the trained prediction model to predict adhesive force of the coated and dried electrode; rolling the coated and dried electrode through a rolling roller; and cutting the rolled electrode through a cutting device and processing the cut electrode into a predetermined shape through a notch device.

Another exemplary embodiment of the present disclosure provides an electrode manufacturing method using a prediction model trained by the learning apparatus, the electrode manufacturing method including: preparing a slurry by mixing an active material, a binder, and a conductive material through a blender; coating the mixed slurry on a support through a coating device and drying the support coated with the slurry through a drying oven; rolling the coated and dried electrode through a rolling roller; obtaining a near-infrared spectrum by emitting near-infrared rays to the rolled electrode through a near-infrared spectrometer, and inputting the obtained near-infrared spectrum into the trained prediction model to predict adhesive force of the rolled electrode; and cutting the rolled electrode through a cutting device and processing the cut electrode into a predetermined shape through a notch device.

Another exemplary embodiment of the present disclosure provides a lithium secondary battery including: a positive electrode manufactured by the electrode manufacturing method; a negative electrode manufactured by the electrode manufacturing method; and a separation film interposed between the positive electrode and the negative electrode.

Another exemplary embodiment of the present disclosure provides an electrode monitoring device using a prediction model trained by the learning apparatus, the electrode monitoring device including: a prediction model trained by the learning apparatus; and a monitoring processor for calculating a differential mean of a plurality of wave number sections including a characteristic of adhesive force of an electrode in a near-infrared spectrum received from a near-infrared spectrometer and transmitting the calculated differential mean to the prediction model, in which the prediction model predicts the adhesive force of the electrode by receiving the differential mean of the plurality of wave number sections.

The near-infrared spectrum may be obtained for a coated and dried electrode.

The near-infrared spectrum may be obtained for a rolled electrode.

### [Advantageous Effects]

According to the exemplary embodiment of the present disclosure, there is an advantage in that adhesive force of an electrode may be predicted in a non-destructive manner through a machine learning technique.

In addition, the change in adhesive force of the electrode in production may be monitored in real time by using the predicted adhesive force value, and good and bad electrode quality may be determined.

### [Description of the Drawings]

FIG. 1 is a block diagram illustrating a learning apparatus for predicting adhesive force of an electrode according to an exemplary embodiment of the present disclosure.
FIG. 2 is a diagram illustrating a plurality of wave number sections extracted by a processor.
FIG. 3 is a diagram illustrating a prediction model according to the exemplary embodiment of the present disclosure.
FIG. 4 is a flowchart of a learning method for predicting adhesive force of an electrode according to an exemplary embodiment of the present disclosure.
FIG. 5 is a diagram illustrating a result of predicting adhesive force of an electrode by using a prediction model according to the exemplary embodiment of the present disclosure.
FIGS. 6 and 7 are examples of predicting adhesive force of an electrode in real time by using a prediction model trained by the learning apparatus or the learning method according to the exemplary embodiment of the present disclosure.
FIG. 8 is a flowchart of a method of manufacturing an electrode by using a prediction model trained by a learning apparatus or a learning method according to a first exemplary embodiment of the present disclosure.
FIG. 9 is a diagram illustrating an electrode manufacturing process according to the first exemplary embodiment of the present disclosure.
FIG. 10 is a flowchart of a method of manufacturing an electrode by using a prediction model trained by a learning apparatus or a learning method according to a second exemplary embodiment of the present disclosure.
FIG. 11 is a diagram illustrating an electrode manufacturing process according to the second exemplary embodiment of the present disclosure.
FIG. 12 is a diagram illustrating a lithium secondary battery manufactured by an electrode manufacturing method using the prediction model trained by the learning apparatus or the learning method according to the exemplary embodiment of the present disclosure.

### [Mode for Invention]

In describing the exemplary embodiment disclosed in the present disclosure, when it is determined that detailed description relating to well-known functions or configurations may make the subject matter of the exemplary embodiment disclosed in the present disclosure unnecessarily ambiguous, the detailed description will be omitted. Further, the accompanying drawings are provided for helping to easily understand exemplary embodiments disclosed in the present specification, and the technical spirit disclosed in the present specification is not limited by the accompanying drawings, and it will be appreciated that the present disclosure includes all of the modifications, equivalent matters, and substitutes included in the spirit and the technical scope of the present disclosure.

Terms including an ordinal number, such as first and second, are used for describing various components, but the components are not limited by the terms. The terms are used only to discriminate one component from another component.

It should be understood that when one constituent element referred to as being "coupled to" or "connected to" another constituent element, one constituent element may be directly coupled to or connected to the other constituent element, but intervening elements may also be present. In contrast, when one constituent element is "directly coupled to" or "directly connected to" another constituent element, it should be understood that there are no intervening element present.

In the present application, it will be appreciated that terms "including" and "having" are intended to designate the existence of characteristics, numbers, operations, operations, constituent elements, and components described in the specification or a combination thereof, and do not exclude a possibility of the existence or addition of one or more other characteristics, numbers, operations, operations, constituent elements, and components, or a combination thereof in advance.

Hereinafter, the present disclosure will be described in detail with reference to the accompanying drawings.

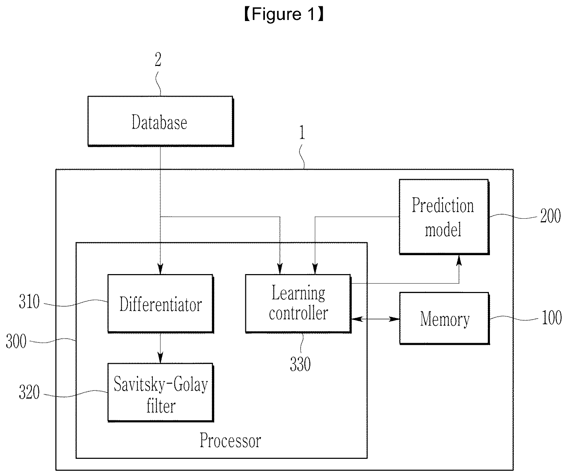

FIG. 1 is a block diagram illustrating a learning apparatus for predicting adhesive force of an electrode according to an exemplary embodiment of the present disclosure.

Referring to FIG. 1, a learning apparatus 1 for predicting adhesive force of an electrode according to an exemplary embodiment of the present disclosure may include a memory 100, a prediction model 200, and a processor 300.

The memory 100 stores a near-infrared spectrum with respect to the electrode and a measurement value for the adhesive force of the electrode.

The near-infrared spectrum is measured with respect to the surface of the electrode and may be obtained by a near-infrared spectrometer 440. Here, the near-infrared spectrometer 440 may obtain a near-infrared spectrum with respect to the electrode by emitting the near-infrared rays, which have a wavelength band of 750 to 25000 nm, to the surface of the electrode and scanning the surface of the electrode.

According to the exemplary embodiment, the near-infrared spectrum may be a spectrum for a wave number region of 4,000 to 13,333 cm⁻¹.

Depending on the exemplary embodiment, a plurality of characteristic sections related to adhesive force of the electrode may be included in the near-infrared spectrum, and the plurality of characteristic sections may be divided based on wave number.

The measurement value is obtained by measuring the adhesive force of the electrode, and may be obtained through a method of measuring adhesive force of an electrode known in the related art. For example, the measurement value may be a value measured by a 90° peel test.

Depending on the exemplary embodiment, the measurement values may be classified for each process of producing an electrode. For example, the measurement value may be a value measured for the adhesive force of the electrode after the coating process or a value measured for the adhesive force of the electrode after the rolling process.

The near-infrared spectrum and the measurement values stored in the memory 100 may be transmitted to the processor 300 for training a prediction model 200.

The prediction model 200 may predict the adhesive force of the electrode by receiving a differential mean of a plurality of wave number sections including characteristics for the adhesive force of the electrode in the near-infrared spectrum.

Since the characteristics of the near-infrared spectrum change according to the adhesive force of the electrode, the prediction model 200 may predict the adhesive force of the electrode by analyzing the characteristic change of the near-infrared spectrum. That is, by acquiring the characteristics related to the adhesive force of the electrode in the near-infrared spectrum, the predictive model 200 may learn the correlation between the changes in the characteristics related to the adhesive force of the electrode in the near-infrared spectrum and the adhesive force of the electrode. Using the trained predictive model 200, the adhesive force of the electrode may be predicted from the characteristics related to the adhesive force of the electrode in the near-infrared spectrum.

Depending on the exemplary embodiment, the prediction model 200 may predict adhesive force after the coating process of the electrode or adhesive force after the rolling process of the electrode.

For example, the differential averages of a plurality of wave number sections from the near-infrared spectrum of the electrode after the coating process are input to the prediction model 200, and the prediction model 200 may perform learning to predict the adhesive force of the electrode based on the differential averages of the plurality of wave number sections after the coating process.

In addition, for example, when the prediction model 200 is trained by using the near-infrared spectrum of the electrode after the rolling process, the trained prediction model 200 may predict the adhesive force of the electrode after the rolling process. That is, according to the process in which the near-infrared spectrum used for training the prediction model 200 is acquired, the adhesive force prediction model 200 of the electrode for each process of the electrode may be generated.

Depending on the exemplary embodiment, the prediction model 200 may predict the adhesive force of the electrode after the rolling process from the near-infrared spectrum obtained for the electrode after the coating process. For example, when the prediction model 200 is trained by using the near-infrared spectrum obtained for the electrode after the coating process and the measurement value obtained by measuring the adhesive force of the electrode after the rolling process, a model for predicting the adhesive force of the electrode after the rolling process may be generated from the near-infrared spectrum obtained for the electrode after the coating process. That is, the prediction model 200 trained by using the near-infrared spectrum for the electrode after the coating process and the measurement value for the adhesive force of the electrode after the rolling process may predict and output the adhesive force of the electrode after the rolling process when the near-infrared spectrum is input.

The predictive model 200 may determine various prediction parameters necessary for making predictions through training that predicts outputs based on inputs. The predictive model 200 may be implemented as a program consisting of multiple operations that predict outputs for new inputs using these determined prediction parameters. The predictive model 200 may be implemented in hardware by processors such as CPUs and GPUs that execute the aforementioned program.

The processor 300 may extract a plurality of wave number sections from the near-infrared spectrum, and may calculate a differential mean of the extracted wave number sections and transmit the differential mean to the prediction model 200.

According to the exemplary embodiment, the processor 300 may preprocess the near-infrared spectrum to extract a plurality of wave number sections. In this case, the preprocessing of the near-infrared spectrum may be performed by receiving, by the processor 300, the near-infrared spectrum and performing primary differentiation on the near-infrared spectrum. The processor 300 may be implemented as hardware, such as CPUs and GPUs, that executes programs containing multiple instructions to direct multiple operations performing the aforementioned tasks.

According to the exemplary embodiment, the processor 300 may include a differentiator 310, a Savitsky-Golay filter 320, and a learning controller 330.

The differentiator 310 may generate each of the plurality of differential values as each of the plurality of characteristic values by primarily differentiating the near-infrared intensity in each of the plurality of wave number sections in the near-infrared spectrum.

According to the exemplary embodiment, the differentiator 310 may primarily differentiate the near-infrared intensity in each of a plurality of wave number sections by using the Savitsky-Golay filter 320.

The learning controller 330 may derive a plurality of near-infrared spectra for a plurality of electrodes from a database 2 and apply the derived plurality of near-infrared spectra to the differentiator 310. Each of the plurality of near-infrared spectra may be converted into a plurality of characteristic values for each of the plurality of electrodes through the differentiator 310 and provided to the learning controller 330. The learning controller 330 may match the plurality of characteristic values for each of the plurality of electrodes and a measurement value for each electrode, and store the matched characteristic values and measurement values in the memory 100. The learning controller 330 may match the plurality of characteristic values and the measurement values derived for each of the plurality of electrodes, and store the matched characteristic values and measurement values in the memory 100 as a learning data set.

The learning controller 330 may provide characteristic values and measurement values for the arbitrary number of electrodes in the training data set to the prediction model 200 as training data. The prediction model 200 provides the learning controller 330 with an adhesive force value (hereinafter, a predicted value) predicted in training using the corresponding training data. The learning controller 330 may adjust the parameters of the prediction model 200 so that the predicted value is close to the measurement value.

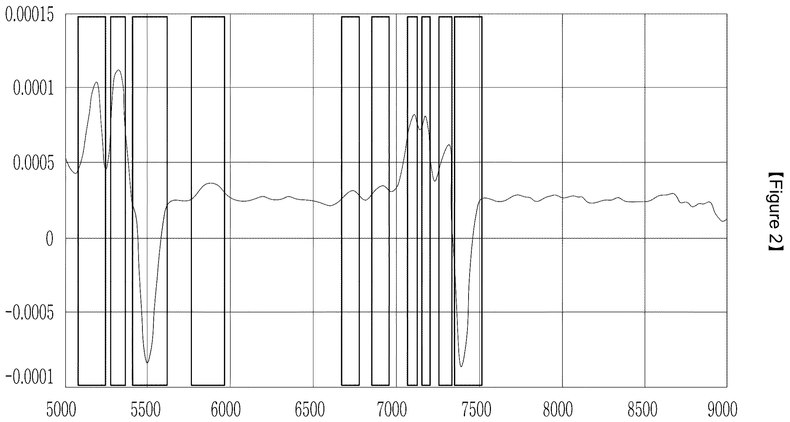

FIG. 2 is a diagram illustrating the plurality of wave number sections extracted by the processor.

Referring to FIG. 2, the plurality of wave number sections may be sections changed by adhesive force of an electrode in a near infrared spectrum, and may be specific sections experimentally obtained.

For example, the plurality of wave number sections may refer to sections in which a peak occurs in a preprocessed near-infrared spectrum, such as the primary differentiation, and may be a plurality of preset wave number sections as shown in [Table 1] below. Here, a plurality of preset wave number sections may be sections in which a characteristic change of the near-infrared spectrum due to adhesive force is mainly generated.

**(Table 1)**

| Section name | Wave number [cm⁻¹] |
|---|---|
| Section 1 | 5245 - 5060 |
| Section 2 | 5399 - 5245 |
| Section 3 | 5646 - 5415 |
| Section 4 | 6047 - 5754 |
| Section 5 | 6819 - 6063 |
| Section 6 | 7143 - 6973 |
| Section 7 | 7235 - 7143 |
| Section 8 | 7328 - 7235 |
| Section 9 | 7451 - 7343 |
| Section 10 | 8485 - 7513 |

According to the exemplary embodiment, a plurality of wave number sections may include a moisture section and a binder section. The moisture section may mean a section in which the characteristics of the near-infrared spectrum are changed by moisture in the electrode, and the binder section may mean a section in which the characteristics of the near-infrared spectrum are changed by the binder in the electrode.

For example, in Table 1, Section 1, Section 2, Section 3, Section 6, Section 7, Section 8 may be moisture sections, and Section 4, Section 5, Section 9, and Section 10 may be binder sections.

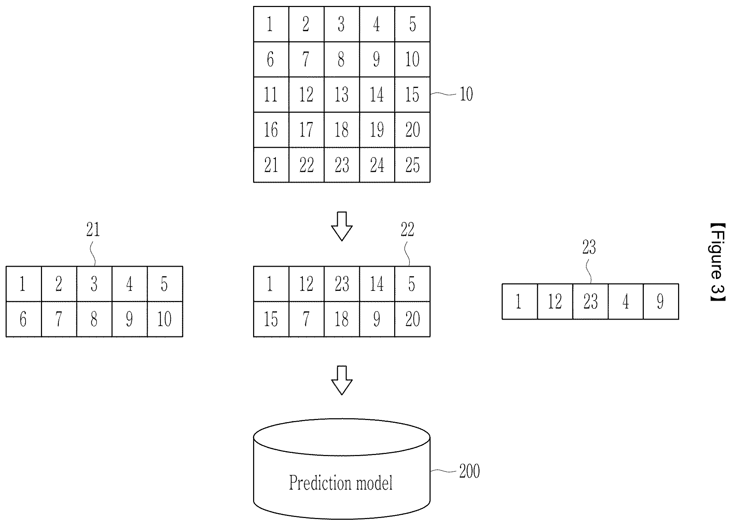

FIG. 3 is a diagram illustrating the prediction model according to the exemplary embodiment of the present disclosure.

Referring to FIG. 3, the processor 300 according to the exemplary embodiment of the present disclosure may construct the data set 10 and randomly extract training data from the data set 10 in order to train the prediction model 200. In addition, the processor 300 may predict the adhesive force of the electrode by applying the extracted training data to the prediction model 200. According to the exemplary embodiment, the prediction model 200 may be implemented as a random forest learning model.

According to the exemplary embodiment, the processor 300 may receive a near-infrared spectrum and a measurement value, calculate each of a plurality of differential means for each of a plurality of wave number sections extracted from the near-infrared spectrum, generate the plurality of differential means and the measurement values as training data, and generate training data for the plurality of electrodes to construct the data set 10.

For example, as shown in FIG. 3, the processor 300 may construct the data set 10 by using 25 training data generated for each of the 25 electrodes. Here, each of the 25 training data may include a plurality of differential means and measurement values.

According to the exemplary embodiment, the processor 300 may receive the near-infrared spectrum, the measurement value, a thickness of the electrode, and an active material loading value of the electrode, calculate each of a plurality of differential means for each of a plurality of wave number sections extracted from the near-infrared spectrum, generate the plurality of differential means, the measurement value, the thickness of the electrode, and the active material loading value of the electrode as training data, and generate the training data for the plurality of electrodes to construct the data set 10. In this case, each of the plurality of training data included in the data set 10 may include the plurality of differential means, the measurement value, the thickness of the electrode, and the active material loading value of the electrode.

According to the exemplary embodiment, the prediction model 200 may perform training to predict the adhesive force of the electrode by applying the plurality of training data randomly extracted from the data set 10 to the prediction model 200.

For example, the prediction model 200 may perform learning to predict the adhesive force of the electrodes as follows. First, the learning controller 330 extracts the learning data 21 from 1 to 10 from the data set 10 and provides the extracted learning data to the prediction model 200. The prediction model 200 may be implemented as a random forest learning model. The prediction model 200 may implement a first decision making tree by performing learning using the learning data 21. The learning controller 330 randomly extracts 10 learning data 22 from the learning data of 1 to 25 in the data sets 10 and provides the extracted learning data to the prediction model 200. The prediction model 200 may implement a second decision making tree by performing learning using the learning data 22. The learning controller 330 randomly extracts five learning data 23 from among the learning data of 1 to 25 in the data set 10 and provides the extracted learning data 23 to the prediction model 200. The prediction model 200 may implement a third decision making tree by performing learning using the learning data 22.

After the training is completed, the prediction model 200 may determine a predicted value by using three predicted values derived by applying a plurality of characteristic values of an input near-infrared spectrum to first to third decision making trees. For example, the prediction model 200 may determine a mean of the three predicted values as a predicted value.

Meanwhile, the number of training data extracted from the data set 10 and the number of decision making trees constituting the random forest training model are not limited to this example.

That is, by varying the number of training data used to generate the decision making tree and the method of extracting the training data, the diversity of the decision making tree may be secured, thereby improving the prediction accuracy of the random forest training model.

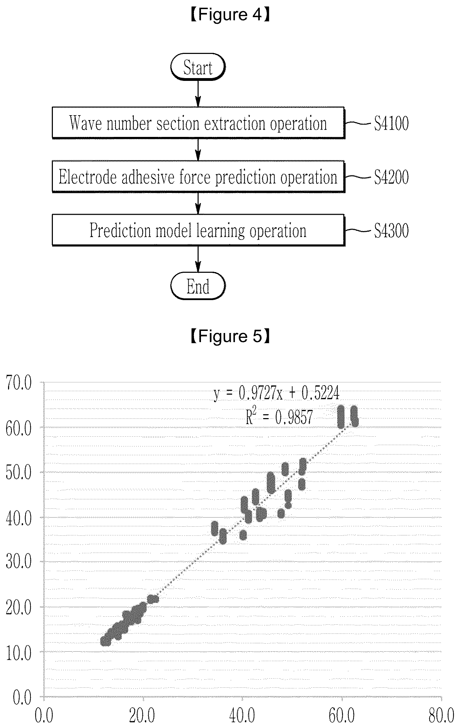

FIG. 4 is a flowchart of a learning method for predicting adhesive force of an electrode according to an exemplary embodiment of the present disclosure.

Referring to FIG. 4, a learning method for predicting adhesive force of an electrode according to an exemplary embodiment of the present disclosure may include a wave number section extraction operation S4100, an electrode adhesive force prediction operation S4200, and a prediction model learning operation S4300.

In the wave number section extraction operation S4100, the processor 300 may perform primary differentiation on the input near-infrared spectrum with respect to the electrode, extract a plurality of wave number sections including characteristics for adhesive force of the electrode from the primarily differentiated near-infrared spectrum, and calculate a differential mean of the plurality of wave number sections. In this case, the adhesive force of the electrode may include adhesive force after the coating process of the electrode or adhesive force after the rolling process of the electrode.

According to the exemplary embodiment, a plurality of wave number sections of the near-infrared spectrum may be divided into a moisture section in which a characteristic of the near-infrared spectrum is changed by moisture in an electrode and a binder section in which a characteristic of the near-infrared spectrum is changed by a binder in an electrode.

According to the exemplary embodiment, the wave number section extraction operation S4100 may include primarily differentiating, by the processor 300, the near-infrared spectrum by using the Savitsky-Golay filter 320 (S4110).

In the electrode adhesive force prediction operation S4200, the prediction model 200 may predict the adhesive force of the electrode by receiving the differential mean for the plurality of wave number sections and the measurement value input for the adhesive force of the electrode.

In the prediction model training operation S4300, the processor 300 may train the prediction model 200 so that the prediction value predicted by the prediction model 200 for the adhesive force of the electrode is close to the measurement value.

According to the exemplary embodiment, the prediction model training operation S4300 may include performing training, by the prediction model 200, for predicting the adhesive force of the electrode by applying a plurality of training data randomly extracted from the data set 10 to the random forest training model.

According to the exemplary embodiment, the learning method for predicting adhesive force of the electrode may further include generating, by the processor 300, the differential mean calculated for the plurality of wave number sections of the near-infrared spectrum and the measurement value as training data, and generating training data for a plurality of electrodes to build the data set 10.

According to the exemplary embodiment, the learning method for predicting adhesive force of the electrode may further include generating, by the processor 300, as training data, the plurality of differential means calculated by the processor 300 for each of the plurality of wave number sections of the near-infrared spectrum, the measurement value, a thickness of the electrode, and an active material loading value of the electrode, and generating training data for the plurality of electrodes to build a data set.

In other words, the training data may be generated using the plurality of differential means calculated for each of the plurality of wave number sections of the near-infrared spectrum and measurement values, or may be generated using the plurality of differential means, the measurement values, electrode thickness, and electrode active material loading values.

FIG. 5 is a diagram illustrating a result of predicting adhesive force of an electrode by using the prediction model according to the exemplary embodiment of the present disclosure.

The graph of FIG. 5 shows a result of comparing and verifying the predicted adhesive force predicted by using the prediction model 200 with the actual adhesive force. In the graph, the horizontal axis represents the actual measurement adhesive force of the electrode, and the vertical axis represents the predicted adhesive force predicted using the prediction model 200 according to the exemplary embodiment of the present disclosure. The points indicated in the graph represent the predicted adhesive force predicted by the prediction model 200 compared to the actual measurement adhesive force. Therefore, it means that the points indicated in the graph are more linear, the prediction accuracy is higher.

Referring to FIG. 5, it can be seen that the adhesive force of the electrode predicted by using the prediction model 200 according to the exemplary embodiment of the present disclosure has the accuracy of 98%.

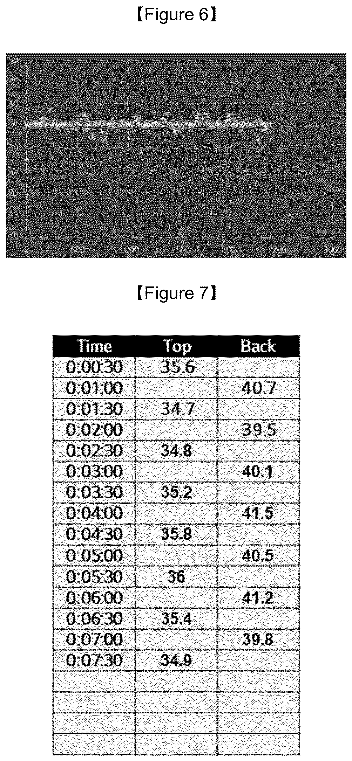

FIGS. 6 and 7 are examples of predicting adhesive force of an electrode in real time by using a prediction model trained by the learning apparatus or the learning method according to the exemplary embodiment of the present disclosure.

Referring to FIGS. 6 and 7, the learning apparatus 1 or the prediction model trained by the learning method according to the exemplary embodiment of the present disclosure may predict and output adhesive force of an electrode that changes in an electrode process in real time.

According to the exemplary embodiment, the trained prediction model may receive a near-infrared spectrum measured in real time with respect to an electrode, or may receive a differential mean for each of a plurality of wave number sections extracted from the near-infrared spectrum by the processor 300.

Here, the differential mean for each of the plurality of wave number sections extracted from the near-infrared spectrum may be calculated through the process of receiving the near-infrared spectrum measured repeatedly at regular time intervals by the near-infrared spectrometer 440 on the electrode's surface, the process of performing primary differential and filtering on the near-infrared spectrum, the process of extracting the plurality of preset wave number sections, and the process of calculating the differential mean for each of the multiple wave number sections.

According to the exemplary embodiment, the adhesive force predicted by the prediction model 200 may be transmitted to an external device, such as a user terminal or a display screen, through the processor 300, and the result predicted by the prediction model 200 may be provided in the form of a graph or a table.

For example, as illustrated in FIG. 6, the result may be represented in the form of a graph in which the horizontal axis is time (sec), and the vertical axis is adhesive force, or as illustrated in FIG. 7, the result may be provided in the form of a table for adhesive force measurement time and a measurement position. In FIG. 7, Top and Back indicate positions at which the near-infrared spectrum is measured for one electrode sample. That is, the processor 300 may visualize a change in adhesive force generated during an electrode process by providing a change in adhesive force in the form of a table, a graph, or the like.

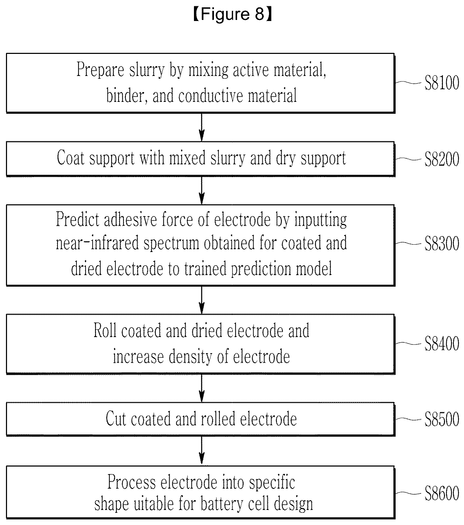

FIG. 8 is a flowchart of a method of manufacturing an electrode by using a prediction model trained by the learning apparatus or the learning method according to a first exemplary embodiment of the present disclosure.

Referring to FIG. 8, a method of manufacturing an electrode according to a first exemplary embodiment of the present disclosure may include a mixing operation S8100, a coating process operation S8200, an electrode adhesive force prediction operation S8300, a rolling process operation S8400, a slitting operation S8500, and a notching operation S8600.

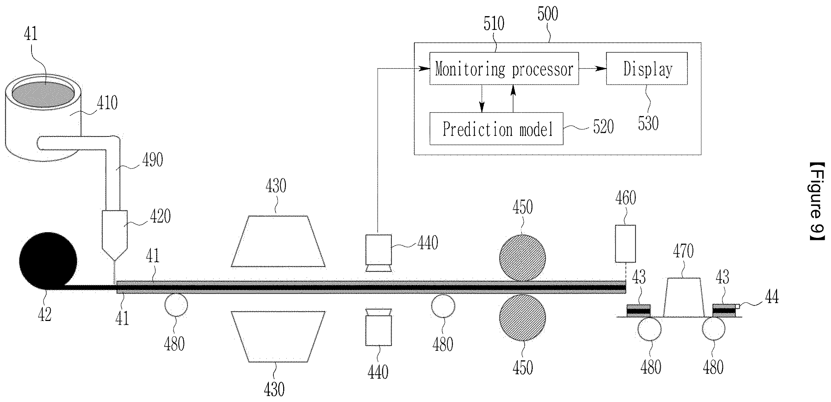

FIG. 9 is a diagram illustrating an electrode manufacturing process according to the first exemplary embodiment of the present disclosure.

Referring to FIGS. 8 and 9, in the mixing operation S8100, a slurry 41 may be prepared by adding a material of an electrode to the mixer 410. That is, the mixer 410 may prepare the slurry 41 by mixing the added materials of the electrode. In this case, the material of the electrode used in manufacturing the slurry 41 varies depending on the capacity and output of the electrode to be manufactured, and at least one of materials, such as an active material, a conductive material, a binder, and a thickener, may be mixed and used.

Here, the active material is a material responsible for a main electrochemical reaction of a positive electrode 610 or a negative electrode 620, and lithium metal oxide, natural graphite, artificial graphite, or the like may be used alone or may be mixed and used. The conductive material is a material that increases electrical conductivity, and carbon black or the like may be used. The binder is a material that maintains the mechanical stability of the electrode and serves as an adhesive that helps the active material adhere well to the support 42, and it is possible to adjust the adhesive force of the electrode by controlling the amount of the binder used in preparing the slurry 41. The thickener is a chemical substance that increases the viscosity of the slurry 41, and the viscosity of the slurry 41 before coating may be adjusted by the amount of the thickener contained in the slurry 41.

In the coating process operation S8200, the mixed slurry 41 may be coated on the support 42 and dried.

In the coating process operation S8200, the support 42 rolled in the form of a roll may be unwound in one direction. In this case, one end of the support 42 unwound in one direction may be transferred to a coating device 420 by a transfer roller 480. Here, the support 42 is a component that supports the material of the electrode and provides electrical connection, and may be, for example, aluminum foil or copper foil.

In the coating process operation S8200, the mixed slurry 41 may be coated on at least one surface of the support 42 by the coating device 420. In this case, the slurry 41 mixed in the mixer 410 may be transferred to the coating device 420 through a transfer pipe 490, and the like. The support 42 coated with the slurry 41 may be transferred to a drying oven 430 by the transfer roller 480.

Here, the coating device 420 may coat the support 42 by using at least one slurry 41. For example, in the coating process operation S8200, the support 42 may be coated by using one kind of slurry 41, or two or more slurries 41 having different compositions may be used to coat the support 42 in multiple layers. When the support 42 is coated in multiple layers, the type and composition ratio of the active material, the binder, the thickener, and the conductive material of the upper-layer slurry 41 and the lower-layer slurry 41 may be designed differently depending on the capacity and output of an electrode to be manufactured.

The coating device 420 may coat the slurry 41 on only one surface of the support 42 or may coat the slurry 41 on both surfaces of the support 42. In FIG. 9, the slurry 41 is shown to be coated on both upper and lower surfaces of the support 42, but the form and position in which the slurry 41 is coated on the support 42 are not limited thereto. For example, the slurry 41 may be coated only on the upper surface of the support 42 or only on the lower surface of the support 42. In addition, in FIG. 9, it is illustrated that the coating device 420 has a pentagonal cross-section and is located on the upper portion of the support 42, but the shape and position of the coating device 420 are not limited thereto, and may be freely changed according to design requirements of the electrode manufacturing device. For example, the coating device 420 may be applied with a slot die coating method in which the liquid slurry 41 is uniformly applied onto the support 42 through a slit-shaped nozzle, or a comma coating method in which the slurry 41 is applied onto the support 42 between two rollers with a comma-shaped gap.

The coating device 420 may adjust the thickness and the loading amount of the electrode by controlling the amount of slurry 41 discharged and the coating speed.

In the coating process operation S8200, the support 42 coated with the slurry 41 may be dried through the drying oven 430. That is, the drying oven 430 may dry the solvent in the slurry 41 coated on the support 42 to fix the material of the electrode included in the slurry 41 to the support 42.

The drying oven 430 may optimize the drying process of the electrode so that the adhesive force of the electrode is uniform and stable by adjusting the temperature and air volume of the drying oven according to the amount of the slurry 41 discharged from the coating device 420, the coating speed of the slurry 41, the thickness of the electrode, and the loading amount.

According to the exemplary embodiment, in the coating process operation S8200, the slurry 41 is coated and dried on the upper surface of the support 42, and then the slurry 41 is coated and dried on the lower surface of the support 42, thereby manufacturing an electrode in which the slurry 41 is coated and dried on both surfaces of the support 42.

For example, the coating process operation S8200 may include a process of releasing the support 42 rolled in the form of a roll in one direction, a process of coating the slurry 41 on the support 42 by applying the slurry 41 to the upper surface of the support 42, a process of drying and fixing the slurry 41 coated on the upper surface of the support 42, a process of coating the slurry 41 on the lower surface of the support 42 to coat the support 42 with the slurry 41, and a process of drying and fixing the slurry 41 coated on the lower surface of the support 42.

The electrode adhesive force prediction operation S8300 may include obtaining a near-infrared spectrum by emitting near-infrared rays to the coated and dried electrode, and predicting adhesive force of the electrode by inputting the obtained near-infrared spectrum to the monitoring device 500.

In this case, the coated and dried electrode may pass between the two near-infrared spectrometers 440. In FIG. 9, the coated and dried electrode is illustrated to pass between the two near-infrared spectrometers 440 disposed vertically in the transfer path. However, the position and arrangement of the near-infrared spectrometer 440 are not limited thereto, and the position and arrangement of the near-infrared spectrometer 440 may be freely changed depending on the position where the slurry 41 is coated on the support 42 or the design requirements of the electrode manufacturing apparatus. For example, when the slurry 41 is coated only on the upper surface of the support 42, the near-infrared spectrometer 440 may be disposed above the transfer path of the coated and dried electrode.

The near-infrared spectrometer 440 may transmit the near-infrared spectrum obtained with respect to the coated and dried electrode to the monitoring device 500. According to the exemplary embodiment, the near-infrared spectrometer 440 may repeatedly measure the near-infrared spectrum at predetermined time intervals with respect to the surface of the electrode.

The monitoring device 500 may repeatedly receive the near-infrared spectrum from the near-infrared spectrometer 440 at predetermined time intervals, and may predict and provide adhesive force to an electrode by using the received near-infrared spectrum. According to the exemplary embodiment, the monitoring device 500 may include a monitoring processor 510, a prediction model 520, and a display 530. In this case, the prediction model 520 may be a prediction model 520 trained by the learning apparatus 1 according to the exemplary embodiment of the present disclosure.

The monitoring device 500 may input the near-infrared spectrum received from the near-infrared spectrometer 440 to the monitoring processor 510. The monitoring processor 510 may extract a plurality of wave number sections from the near-infrared spectrum, and may calculate a differential mean of the plurality of extracted wave number sections to transmit the calculated differential mean to the trained prediction model 520. For example, the monitoring processor 510 may perform primary differential and filtering on the received near-infrared spectrum to extract a plurality of preset wave number sections and calculate a differential mean for each of a plurality of wave number sections. The trained prediction model 520 may predict adhesive force to the coated and dried electrode based on the differential mean for each of the plurality of wave number sections. The adhesive force predicted through the trained prediction model 520 may be transmitted to a user terminal or an external device, such as the display 530, through the monitoring processor 510 and provided to the user.

Here, the adhesive force of the electrode predicted through the trained prediction model 520 may be the adhesive force of the electrode after the coating process or the adhesive force of the electrode after the rolling process. For example, when the trained prediction model 520 is a prediction model 520 trained by using the near-infrared spectrum obtained for the electrode after the coating process and the measurement value obtained by measuring the adhesive force of the electrode after the coating process, the adhesive force of the electrode predicted in the electrode adhesive force prediction operation S8300 corresponds to the adhesive force of the electrode after the coating process. As another example, when the trained prediction model 520 is a prediction model 520 trained by using the near-infrared spectrum obtained for the electrode after the coating process and the measurement value obtained by measuring the adhesive force of the electrode after the rolling process, the adhesive force of the electrode predicted in the electrode adhesive force prediction operation S8300 corresponds to the adhesive force of the electrode after the rolling process.

In the rolling process operation S8400, the coated and dried electrode may be rolled to increase the density of the electrode. In this case, the coated and dried electrode may pass between the two rolling rollers 450. In the rolling process operation S8400, the thickness and density of the electrode after the rolling may be optimized by adjusting the gap between the two rolling rollers 450 and the temperature of the rolling roller 450. As the electrode is rolled in the rolling process operation S8400, the voids of the electrode may be minimized and adhesive force may be improved.

In the slitting operation S8500, the coated and rolled electrode may be cut into a required size. In this case, the electrode may be cut into various forms according to the shape and size of the battery to be manufactured by the cutting device 460.

In FIG. 9, the cutting device 460 is illustrated as a laser cutter that cuts an electrode into a desired shape by using a laser beam, but the type of cutting device 460 is not limited thereto. For example, the cutting device 460 may be a rotary die cutter that cuts an electrode into a desired shape by using a roller-shaped cutter, a scissor-type slitter that cuts an electrode by operating two blades like scissors.

In the notching operation S8600, the cut electrode 43 may be processed into a specific shape suitable for the battery cell design. For example, in the notching operation S8600, a specific portion of the electrode 43 cut by the notching device 470 may be precisely cut to form a tab 44 for connecting the positive electrode 610 or the negative electrode 620. As another example, in the notching operation S8600, the electrode 43 cut by the notching device 470 may be processed into a shape (e.g., a cylindrical shape, or a square plate shape) suitable for cell assembly. Depending on the exemplary embodiment, the notching device 470 may be a punching machine, a laser machine, or the like.

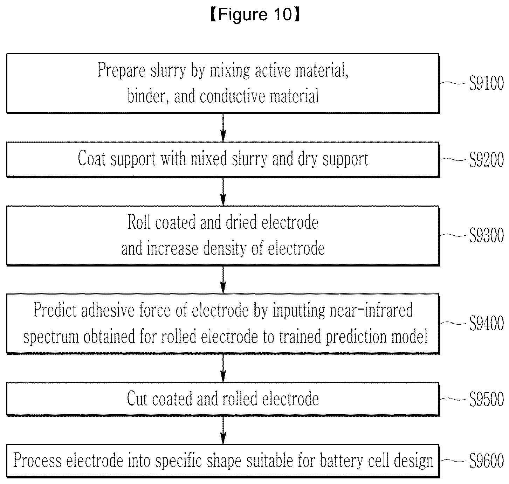

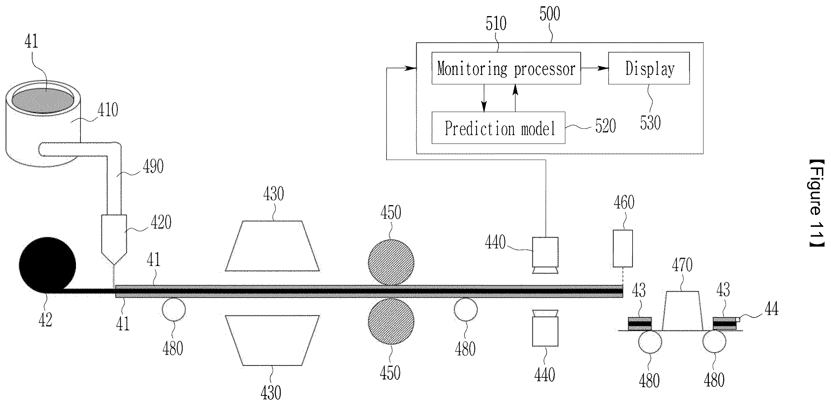

FIG. 10 is a flowchart of a method of manufacturing an electrode by using a prediction model trained by the learning apparatus or the learning method according to a second exemplary embodiment of the present disclosure, and FIG. 11 is a diagram illustrating an electrode manufacturing process according to the second exemplary embodiment of the present disclosure.

Referring to FIGS. 10 and 11, a method of manufacturing an electrode by using a prediction model trained by a learning apparatus or a learning method according to a second exemplary embodiment of the present disclosure may include a mixing operation S9100, a coating process operation S9200, a rolling process operation S9300, an electrode adhesive force prediction operation S9400, a slitting operation S9500, and a notching operation S9600.

The electrode manufacturing method according to the second exemplary embodiment of the present disclosure in which the electrode adhesive force prediction operation S9400 is performed after the rolling process operation S9300 is compared with the first exemplary embodiment of the present disclosure in which the electrode adhesive force prediction operation S8300 is performed after the coating process operation S8200. That is, the electrode manufacturing methods according to the first and second exemplary embodiments of the present disclosure has differences only in the order between some components (that is, the coating process operation, the rolling process operation, and the electrode adhesive force prediction operation), and other matters are common. Hereinafter, only parts different from the first exemplary embodiment will be described in the method of manufacturing an electrode according to the second exemplary embodiment.

The electrode of which the coating and the drying are completed in the coating process operation S9200 may be transferred between the two rolling rollers 450 through a transfer device. The electrode of which the rolling is completed in the rolling process operation S9300 may be transferred to the near-infrared spectrometer 440 through a transfer device.

The electrode adhesive force prediction operation S9400 may obtain a near-infrared spectrum by emitting near-infrared rays to the rolled electrode, and may predict adhesive force of the electrode by inputting the obtained near-infrared spectrum to the monitoring device 500.

In this case, the rolled electrode may pass between the two near-infrared spectrometers 440. In FIG. 11, the coated and dried electrode is illustrated to pass between the two near-infrared spectrometers 440 disposed above and below the transfer path. However, the position and arrangement of the near-infrared spectrometer 440 are not limited thereto, and the position and arrangement of the near-infrared spectrometer 440 may be freely changed depending on the position where the slurry 41 is coated on the support 42 or the design requirements of the electrode manufacturing apparatus. For example, when the slurry 41 is coated only on the upper surface of the support 42, the near-infrared spectrometer 440 may be disposed above the transfer path of the coated and dried electrode.

The near-infrared spectrometer 440 may transmit the near-infrared spectrum obtained with respect to the rolled electrode to the monitoring apparatus 500. According to the exemplary embodiment, the near-infrared spectrometer 440 may repeatedly measure the near-infrared spectrum at predetermined time intervals with respect to the surface of the electrode.

The adhesive force of the electrode predicted through the prediction model 520 trained in the electrode adhesive force prediction operation S9400 may be the adhesive force of the electrode after the coating process or the adhesive force of the electrode after the rolling process. For example, when the trained prediction model 520 is the prediction model 520 trained by using the near-infrared spectrum obtained for the electrode after the rolling process and the measurement value obtained by measuring the adhesive force of the electrode after the coating process, the adhesive force of the electrode predicted in the electrode adhesive force prediction operation S9400 corresponds to the adhesive force of the electrode after the coating process. As another example, when the trained prediction model 520 is the prediction model 520 trained by using the near-infrared spectrum obtained for the electrode after the rolling process and the measurement value obtained by measuring the adhesive force of the electrode after the rolling process, the adhesive force of the electrode predicted in the electrode adhesive force prediction operation S9400 corresponds to the adhesive force of the electrode after the rolling process.

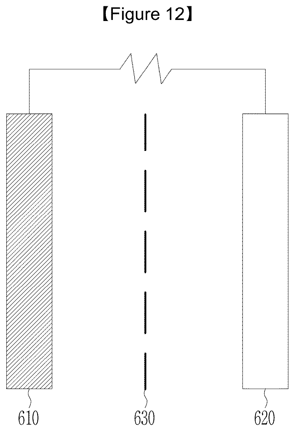

FIG. 12 is a diagram illustrating a lithium secondary battery manufactured by an electrode manufacturing method using the prediction model trained by the learning apparatus or the learning method according to the exemplary embodiment of the present disclosure.

Referring to FIG. 12, a secondary battery according to the exemplary embodiment of the present disclosure may include a positive electrode 610, a negative electrode 620, a separation film 630, and an electrolyte (not illustrated in the drawing).

The positive electrode 610 may include a positive electrode current collector and a positive electrode active material disposed on at least one surface of the positive electrode current collector. The positive electrode active material is a material that serves to accommodate and release lithium ions in the lithium secondary battery, and charging and discharging of the secondary battery are performed in the process of releasing or inserting lithium ions from or into the positive electrode active material. The positive electrode active material may be composed of a lithium metal oxide, such as lithium cobalt oxide, lithium iron phosphate, lithium nickel manganese cobalt oxide, and lithium manganese oxide. The positive electrode current collector serves to transfer electrons generated from the positive electrode active material to an external circuit of the battery, and facilitates the flow of electrons to improve the efficiency of the battery. The positive electrode current collector may be made of aluminum.

According to the exemplary embodiment, the positive electrode 610 may be manufactured by an electrode manufacturing method using the prediction model 200 trained by the learning apparatus and the learning method according to the exemplary embodiment of the present disclosure.

The negative electrode 620 may include a negative electrode current collector and a negative electrode active material placed on at least one surface of the negative electrode current collector. The negative electrode active material is a material that stores and releases lithium ions in a lithium secondary battery, and when the lithium secondary battery is charged, lithium ions move from the positive electrode 610 to the negative electrode 620 and are stored in the negative electrode active material, and when the lithium secondary battery is discharged, current is generated as lithium ions move from the negative electrode 620 to the positive electrode 610. The negative electrode active material may be made of graphite, silicon, lithium metal, metal oxide, alloy material, or the like. The negative electrode current collector serves to help electrons generated from the negative electrode active material flow smoothly to an external circuit, and provides a path of electrons. The negative electrode current collector may be made of copper.

According to the exemplary embodiment, the negative electrode 620 may be manufactured by an electrode manufacturing method using the prediction model 200 trained by the learning apparatus and the learning method according to the exemplary embodiment of the present disclosure.

The separation film 630 is a thin film positioned between the positive electrode 610 and the negative electrode 620, and allows lithium ions to pass therethrough but does not allow electrons to pass therethrough. Direct contact between the positive electrode 610 and the negative electrode 620 in the lithium secondary battery is prevented through the separation film 630, thereby preventing a short circuit. The separation film 630 may be made of a polymer, such as polypropylene (PP), polyethylene (PE), etc.

The electrolyte is a medium for transferring lithium ions between the positive electrode 610 and the negative electrode 620 in a lithium secondary battery. The electrolyte helps lithium ions move freely while the positive electrode 610 and the negative electrode 620 exchange electrons. The electrolyte may be composed of an organic solvent, such as ethylene carbonate, dimethyl carbonate, or ethyl methyl carbonate.

According to the exemplary embodiment, the lithium secondary battery may be a cylindrical, prismatic, or pouch type secondary battery, but is not particularly limited as long as the lithium secondary battery corresponds to a charge/discharge device.

The method described above may be implemented in a general-purpose digital computer that may be written as a program executable on a computer, and that operates the program using a computer-readable recording medium. The computer-readable recording medium may include a storage medium, such as a magnetic storage medium such as a ROM, RAM, USB, floppy disk, hard disk, or an optical reading medium, such as a CD-ROM or DVD.

The scope of the present disclosure is indicated by the following patent claims rather than by the detailed description above, and the meaning and scope of the claims and all modifications or variations derived from the equivalents thereof shall be construed to be included in the scope of the present disclosure.

### [Description of Symbols]

1: Learning apparatus
2: Database
10: Data set
21, 22, 23: Learning data
100: Memory
200: Prediction model
300: Processor
310: Differentiator
320: Savitsky-Golay filter
330: Learning controller
41: Slurry
42: Supporter
43: Electrode
44: Tab
410: Mixer
420: Coating device
430: Drying oven
440: Near-infrared spectrometer
450: Rolling roller
460: Cutting device
470: Notching device
480: Transfer roller
490: Transfer pipe
500: Monitoring device
510: Monitoring processor
520: Prediction model
530: Display
610: Positive electrode
620: Negative electrode
630: Separation film

## Claims

1. A learning apparatus for predicting adhesive force to an electrode, the learning apparatus comprising:
a memory in which a near-infrared spectrum for an electrode and a measurement value of adhesive force of the electrode are stored;
a prediction model for predicting the adhesive force of the electrode by receiving a differential mean of a plurality of wave number sections including a characteristic for the adhesive force of the electrode in the near-infrared spectrum; and
a processor for receiving the near-infrared spectrum, performing primary differentiation on the near-infrared spectrum, extracting the plurality of wave number sections from the primarily differentiated near-infrared spectrum, calculating the differential mean of the plurality of wave number sections, and transmitting the calculated differential mean to the prediction model,
wherein the processor receives a predicted value for the adhesive force of the electrode and trains the prediction model so that the predicted value is close to the measurement value.

2. The learning apparatus of claim 1, wherein:
the prediction model predicts adhesive force after a coating process of the electrode or adhesive force after a rolling process of the electrode.

3. The learning apparatus of claim 1, wherein:
the plurality of wave number sections includes:
a moisture section in which the characteristic of the near-infrared spectrum is changed by moisture in the electrode; and
a binder section in which the characteristic of the near-infrared spectrum is changed by a binder in the electrode.

4. The learning apparatus of claim 1, wherein:
the processor includes a differentiator that primarily differentiates the near-infrared spectrum by using a Savitsky-Golay filter.

5. The learning apparatus of claim 1, wherein:
the processor receives the near-infrared spectrum and the measurement value, calculates each of the plurality of differential means for each of the plurality of wave number sections of the near-infrared spectrum, generates the plurality of differential means and the measurement value as training data, and generates the training data for a plurality of electrodes to construct a data set.

6. The learning apparatus of claim 1, wherein:
the processor receives the near-infrared spectrum, the measurement value, a thickness of the electrode, and an active material loading value of the electrode, calculates each of a plurality of differential means for each of the plurality of wave number sections of the near-infrared spectrum, generates the plurality of differential means, the measurement value, the thickness of the electrode, and the active material loading value of the electrode as training data, and generates the training data for a plurality of electrodes to construct a data set.

7. The learning apparatus of claim 5 or claim 6, wherein:
the prediction model performs training for predicting the adhesive force of the electrode by applying a plurality of training data randomly extracted from the data set to a random forest training model.

8. A learning method for predicting adhesive force to an electrode, the learning method comprising:
primarily differentiating, by a processor, a near-infrared spectrum input for an electrode, extracting a plurality of wave number sections containing a characteristic of adhesive force of the electrode from the primarily differentiated near-infrared spectrum, and calculating a differential mean of the plurality of wave number sections;
predicting, by a prediction model, adhesive force of the electrode by receiving the differential mean for the plurality of wave number sections and a measurement value input for the adhesive force of the electrode; and
training, by the processor, the prediction model so that a predicted value for the adhesive force of the electrode is close to the measurement value.

9. The learning method of claim 8, wherein:
the adhesive force of the electrode includes adhesive force after a coating process of the electrode or adhesive force after a rolling process of the electrode.

10. The learning method of claim 8, wherein:
the plurality of wave number sections includes:
a moisture section in which the characteristic of the near-infrared spectrum is changed by moisture in the electrode; and
a binder section in which the characteristic of the near-infrared spectrum is changed by a binder in the electrode.

11. The learning method of claim 8, wherein:
the calculating of the differential mean of the plurality of wave number sections includes primarily differentiating, by the processor, the near-infrared spectrum by using a Savitsky-Golay filter.

12. The learning method of claim 8, further comprising:
generating, by the processor, the differential mean calculated for the plurality of wave number sections of the near-infrared spectrum and the measurement value as training data; and
generating the training data for a plurality of electrodes and constructing a data set.

13. The learning method of claim 8, further comprising:
generating, by the processor, the plurality of differential means calculated for each of the plurality of wave number sections of the near-infrared spectrum, the measurement value, the thickness of the electrode, and the active material loading value of the electrode as training data; and
generating the training data for a plurality of electrodes and constructing a data set.

14. The learning method of claim 12 or claim 13, wherein:
the training of the prediction model includes:
performing training the prediction model for predicting the adhesive force of the electrode by applying a plurality of training data randomly extracted from the data set to a random forest training model.

15. An electrode manufacturing method using a prediction model trained by the learning apparatus of claim 1, the electrode manufacturing method comprising:
preparing a slurry by mixing an active material, a binder, and a conductive material through a blender;
coating the mixed slurry on a support through a coating device and drying the support coated with the slurry through a drying oven;
obtaining a near-infrared spectrum by emitting near-infrared rays to the coated and dried electrode through a near-infrared spectrometer, and inputting the obtained near-infrared spectrum into the trained prediction model to predict adhesive force of the coated and dried electrode;
rolling the coated and dried electrode through a rolling roller; and
cutting the rolled electrode through a cutting device and processing the cut electrode into a predetermined shape through a notch device.

16. An electrode manufacturing method using a prediction model trained by the learning apparatus of claim 1, the electrode manufacturing method comprising:
preparing a slurry by mixing an active material, a binder, and a conductive material through a blender;
coating the mixed slurry on a support through a coating device and drying the support coated with the slurry through a drying oven;
rolling the coated and dried electrode through a rolling roller;
obtaining a near-infrared spectrum by emitting near-infrared rays to the rolled electrode through a near-infrared spectrometer, and inputting the obtained near-infrared spectrum into the trained prediction model to predict adhesive force of the rolled electrode; and
cutting the rolled electrode through a cutting device and processing the cut electrode into a predetermined shape through a notch device.

17. A lithium secondary battery comprising:
a positive electrode manufactured by the electrode manufacturing method of claim 15;
a negative electrode manufactured by the electrode manufacturing method of claim 15; and
a separation film interposed between the positive electrode and the negative electrode.

18. A lithium secondary battery comprising:
a positive electrode manufactured by the electrode manufacturing method of claim 16;
a negative electrode manufactured by the electrode manufacturing method of claim 16; and
a separation film interposed between the positive electrode and the negative electrode.

19. A monitoring device comprising:
a prediction model trained by the learning apparatus of claim 1; and
a monitoring processor for calculating a differential mean of a plurality of wave number sections including a characteristic of adhesive force of an electrode in a near-infrared spectrum received from a near-infrared spectrometer and transmitting the calculated differential mean to the prediction model,
wherein the prediction model predicts the adhesive force of the electrode by receiving the differential mean of the plurality of wave number sections.

20. The monitoring device of claim 19, wherein:
the near-infrared spectrum is obtained for a coated and dried electrode.

21. The monitoring device of claim 19, wherein:
the near-infrared spectrum is obtained for a rolled electrode.
